# EUROPEAN PATENT SPECIFICATION

(11) **EP 0 813 367 B1**
(45) Date of publication and mention of the grant of the patent: **02.01.2002**
(21) Application number: 96935326.7
(22) Date of filing: 09.10.1996
(51) Int. Cl.: A21C 11/16, A21C 11/00

(54) **A DEVICE WITH MODULAR STRUCTURES FOR THE RELIEF IMPRESSION ONTO FOOD PASTES AND SIMILAR**
MODULARE PRÄGEVORRICHTUNG FÜR NAHRUNGSMITTEL ODER DGL.
DISPOSITIF A STRUCTURES MODULAIRES POUR IMPRESSION EN RELIEF SUR PATES ALIMENTAIRES ET AUTRES ARTICLES ANALOGUES

(30) Priority: 05.01.1996 IT RM960009
(43) Date of publication of application: 29.12.1997
(73) Proprietor: Carassale, Fabio, 00177 Roma (IT)
(72) Inventor: Carassale, Fabio, 00177 Roma (IT)
(74) Representative: Mascioli, Alessandro
(86) International application number: PCT/IT96/00188
(87) International publication number: WO 97/24932

(56) References cited:
- DE-A- 3 727 596
- GB-A- 463 697
- US-A- 3 080 831

## Description

The present invention concerns a device with modular structures for the relief impression or cuts onto food pastes and similar, that may be applied to all production sectors making use of gauge rollers with fix or adjustable thickness.

It it the aim of the present invetion to obtain a relief or a cut shape onto the product being worked in the machines for the preparation of "ravioli", pastes without filling or pastry products or similar.

The aim set forth is reached by means of the device according to the present invetion, comprising a plurality of separate parts, of the kind of half-bands, or full-coating structures, like jackets, prerferably cut, and that may be replaced and assembled for setting up again the diameter of the cylinder of the shaping group of the machine working the paste, or even for realizing cylinders of dimensions different from the original one, for realizing "raviolis" or different products, of differentiated dimensions.

At present, in the forming machines for the production of alimentary pastes, for obtaining relief impressions or engravings it is necessary to replace the whole forming group or the single cylinder, disassemblying the two lateral sides housing the group of the calibrating cylinders and, in some cases, even a series of cranks, position adjustments etc., with long work interruptions.

The cutting and folding machines for "Bologna paste" have each a specific mechanism for the realization, with one lamination group, of the corresponding cutting kind.

Document GB 463 697 A also discloses a device for forming relief impression onto food pastes.

Such variations may be obtained, according to the present invention, varying the diameter of the cylinder according to the dimension of the "ravioli" or other similar product, maintaining unvaried the dimensions inside the cylinder and working only with supporting thicknesses and prologing the blocking pins below the half-bands or below the full-coaging structure or jacket.

The realization of the device according to the present invention may be applied onto all already existing machines and onto those still to be realized, varying the dimensions according to the available spaces and to the specific kind of machine.

The advantages deriving from the device according to the present invention may be described as follows:
- by means of impression each producer, even an artisan, may personalize by means of a mark his own production;
- in the field of fresh pastes, a relief or cut realization onto the final product is made possible, operating onto the thickness or the image as in a bas-relief.

The present invention will be described more in detail hereinbelow relating to the enclosed drawings in which some embodiments are shown.

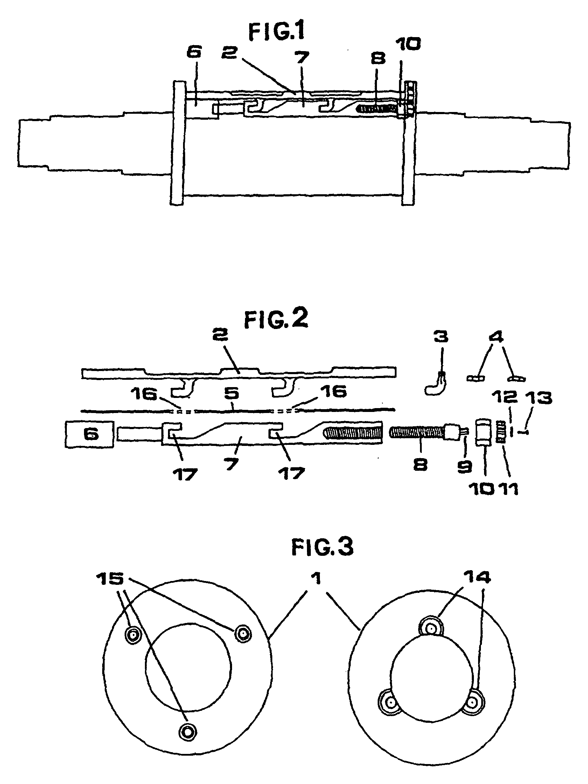

Figure 1 shows a lateral scheme of a device with modular structures for the relief impression onto food pastes and similar, like filled "raviolis".

Figure 2 shows an exploded view of the elements of the device according to the present invention.

Figure 3 shows an external and internal view of the flange.

Figures 4, 5, 6 respectively show a lateral scheme, a view of the details and a front view of a variant of the device according to the present invention, for the relief or cut impression onto not filled food pastes.

The enclosed figures show a device with modular structures for the relief impresion onto food pastes and similar, comprising:
- a flange 1, inside provided with seats 14 for a bushing 10 and with a seat for a washer 12 and for a screw bolt or for the screw 13, and for gears 11 with two cogged wheels or pairs with endless screw-helical wheel; in the case of composed external and internal flanges, according to the number of the half-bands, a plurality of locking points 15 for the internal part of the flange are obtained;
- one or more half-bands 2, complete with underband pins 3;
- one or more under-band pins 3, rounded for facilitating the inlet and outlet into the screwings 17 of the slide 7 and provided, in their upper part, with a washer 4, flat in its lower part and curved in its upper part, for adhering to the under-band, without intermediate threading, for preventing a weakening of said pins following to the continuous end-run, with respective out of centre of the couplings; in a possible variant, a recess may be realized in the under-band inserting, instead of the washer 4, a carrying plate linked to the locking pin, all fixed in said under-band;
- a small carter 5 for protection against dust, comprising a plurality of eyelets 16 for the passage of the pins 3 during locking and unlocking;
- one or more self-lubricating bushings 6 or rollon linear bushings;
- a slide 7 of dimensions variable according to the available spaces and the number of locking points, with translating or rotating movement;
- a motor-pin 8, provided with a threading for threading the slide 7 and with a smooth part for rotating in the self-lubricating bushing 10, with diameter reduction, by means of key 9 for the coupling with the motor-gear 11, fixed onto the end of said pin 8;
- a self-lubricating bushing 10, of circular, square or polygonal shape, for determining the locking and avoiding the sliding and the output of said pin 8 from the flange 1.

The mounting and the functioning of the device according to the present invention may be described as follows:
- the central part of the cylinder is replaced unspitting the central pin 8 so that the slide 7 unlocks the pins 3 and the half-bands 2 may be replaced with new ones, while the other parts remain coupled with the lateral structures of the machine in which said cylinder is mounted:
- the flanges 1 remain mounted or, by means of a threading, they may get loosened and get distanced from the worked central cylinder, replacing it also in the case of flanges consisting of a plurality of pins for blocking the bands or the cylinder, in which, loosening the external part, the internal part adhering to the end of the half-bands 2, under the pressure of springs with balls on their heads, keeps still and, with a minimum pressure towards the outside, said band gets unlocked, allowing the replacement;
- the fixing of the bands may take place by means of screws or similar, which pass through said bands and get fixed onto the cylinder, or by means of a precedent passage in the composed flanges;
- the locking of the bands may be performed with screws provided with a cam-lateral spring pressers; in a variant according to the present invention, a smooth or threaded hole may be performed onto the lateral flanges for inserting a screw or a composed pin, operating onto a spring pin.

Due to the small available space, in a preferred embodiment of the device according to the present invention the following elements are provided:
- the whole worked cylinder with a seat for the slide, the flanges and the half-bands;
- worked bands or bands externally smooth;
- a slot locking system fixed under the band;
- an indirectly worked slide for a slot with the system, fixed under the band;
- a worked slide sliding in a linear guide, or linear bushes or bushings, fixed in a suitable seat in a central area or provided with two terminal linear bushings, with a translation movement with variable run, or with a movement rotating on its own axis, getting locked by means of its own shape, like a cam or with a cam system;
- a slide that is pushed by a micro-cylinder with single or double effect, or by a mechanic actuation with a smooth or threaded pin;
- the passage of air, for actuating the micro-piston, that starts in the lateral flange, starting from the external surface of said flange and crosses a micro-joint, and continuing to the micro-piston with a small pipe of different material, or with a sealed groove out of the same materials.

In a further variant according to the present invetion, a fix ring may be provided around the flange, in which the air connection is present.

With the variation of the dimensions of the "raviolis" - like those with fresh cheese and spinach - also the increase of the diameter of the cylinder is provided by increasing the circumference of the bads and with the interposition of thicknesses and prolongation of the pin provided under said bands, for allowing a rigid and precise complete locking.

The actuating push of slide 7 may be generated by a pneumatic system, with single or double effect, or it may be of the closed circuit kind with sliding piston; in a further variant, said push may also be determined by a mechanic actuation with a smooth or threaded pin, working directly in the section of the slide or placed below the same, while the rotating movement is generated by gears.

For the replacement of the whole roll it is necessary to block the roller-scraping blade with the removal of said blade.

For performing a greater cleaning inside the roll image it is necessary to place - after the passage of the blade - a brush that eliminates the formation of the layer due to the continuous working of the machine, thus facilitating the detachment of the paste from the worked roll.

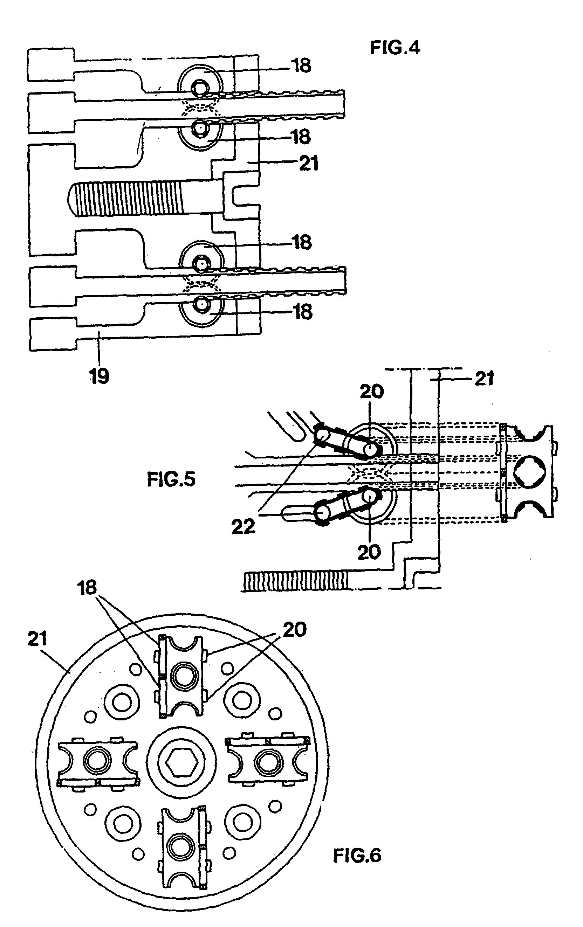

Furthermore, in the variant for working not filled food pastes, as shown in figures 4, 5, and 6, the device according to the present invention, provided inserted in the drawing process, comprises pairs of small cylindric rolls 18, with the same diameter on all their length or provided with variations and shapes with increases or reductions of diameter, housed in the lateral hull structures 19, with transmission gears 20, between the pairs of the small rolls and transmission gears 22 for the rotation, with an endless screw of with a conical couple.

In the engine traction, the start connection between the elements may be realized with interposed clutches.

In a further variant, in the hull-shaped cap 21 the seats may be realized for the belt and the pulleys, connected with the gear 22, while the beginning motive power is supplied by a central pulley, so that if said motive force operated onto a roll pair, the traction of all other rolls is determined by means of belt system in the cap 21 or by means of suitable joints.

The elements are all easily replaceable, as they are housed in the hull structures 19 and 21.

The locking of all mentioned components may be performed in a central or peripherical area, according to the available space.

## Claims

1. A device with modular structures for the relief impression onto food pastes and similar that is adapted to be applied onto all already existing machines for producing food pastes; **characterized in**:
- a flange (1), inside provided with seats (14) for a bushing (10) and with a seat for a washer (12) and for a screw bolt or screw (13), and for gears (11) with two cogged wheels or pairs with endless screw-helical wheel;
- one or more half-bands (2), complete with underband pins (3);
- one or more under-band pins (3), rounded for facilitating the inlet and outlet into screwings (17) of a slide (7) and provided, in their upper part, with a washer (4), flat in its lower part and curved in its upper part, for adhering to the under-band, without intermediate threading, for preventing a weakening of said pins (3) following to the continuous end-run, with respective out of centre of the couplings;
- a small carter (5) for protection against dust, comprising a plurality of eyelets (16) for the passage of the pins (3) during locking and unlocking;
- one or more self-lubricating bushings (6) or rollon linear bushings;
- a slide (7) of dimensions variable according to the available spaces and the number of locking points, with translating or rotating movement;
- a motor-pin (8), provided with a threading for threading into the slide (7) and with a smooth part for rotating in the self-lubricating bushing (10), with diameter reduction by means of key (9) for the coupling with the motor-gear (11), fixed onto the end of said pin (8);
- a self-lubricating bushing (10), of circular, square or polygonal shape, for determining the locking and avoiding the sliding and the output of said pin (3) from the flange (1);
whereby, unspitting the pin (8) the slide (7) unlocks the pins (3) and the half-bands (2) are replaced.

2. A device according to claim 1, **characterized in** the presence of composed external and internal flanges, according to the number of the half-bands, with a plurality of locking points (15) for the internal part of the flange.

3. A device according to claim 1, **characterized in** a recess realized in the under-band inserting, instead of the washer (4), a carrying plate linked to the pin (3), all fixed in said under-band.

4. A device according to claim 1, **characterized in that** the flanges (1) get loosened and get distanced from the central cylinder, replacing it also in the case of flanges consisting of a plurality of pins, in which, loosening the external part, the internal part adhering to the end of the half-bands (2), under the pressure of springs with balls on their heads, keeps still and, with a minimum pressure towards the outside, said band or the cylinder get unlocked, allowing the replacement.

5. A device according to claim 1, **characterized in that** the fixing of the bands takes place by means of screws .or similar, which pass through said bands and get fixed onto the cylinder.

6. A device according to claim 1, **characterized in** the realization of a threaded hole onto the lateral flanges for inserting a screw operating onto a spring pin, locking the half-bands.

7. A device according to claim 1, **characterized in** a worked slide sliding in a bushing or also in a linear guide, fixed in a suitable seat in a central area or provided with two terminal bushings, with a traslating, variable run movement or with a movement rotating on its own axis, which get locked and unlocked by means of a cam shape or by a cam system.

8. A device according to claim 1, **characterized in** the prolongation of the circumference of the cylinder by means of the increase of the circumference of the bands, with the interposition of thicknesses and the prolongation of the pin (3) placed under said bands, so as to allow a rigid and precise total locking, or by increasing the half-bands.

9. A device according to claim 1, **characterized in** a brush for the elimination of the layer due to the continuous working, facilitating the detachment of the paste from the worked roll after the passage of the blade.

10. A device according to claim 1, for the working of not filled food pastes, inserted in the drawing process, **characterized in** the presence of pairs of small cylindric rolls (18), with the same diameter on all their length or provided with variations and shapes with increases or reductions of diameter, housed in the lateral hull structures (19), with transmission gears (20) for rotation.

## Patentansprüche

1. Vorrichtung bestehend aus einer zusammensetzbaren Struktur zur Reliefeinprägung auf Teigwaren und Ähnlichem, auf allen bestehenden Maschinen zur Herstellung von Teigwaren anbringbar, **gekennzeichnet durch**:
- einen Flansch (1), der innen mit Sitzen (14) für eine Buchse (10) und einem Sitz für eine Scheibe (12) und für eine Schraube oder Gewinde (13) und für Räderpaare (11) mit zwei Zahnrädern oder endlosen Schraubenpaaren -Schraubenrad versehen ist;
- einen oder mehrere Halbkolben (2), versehen mit unter den Kolben vorgesehenen Zapfen (3);
- einen oder mehrere, unter den Kolben vorgesehenen Zapfen (3), die abgerundet sind um den Eingang und den Austritt in Verschraubungen (17) eines Läufers (7) zu erleichtern und die im oberen Teil mit einer nach unten hin platten und nach oben hin abgerundeten Scheibe (4) versehen sind um die Anpassung an den Halbkolben zu gewährleisten, ohne Zwischengewinde, dazu geeignet, eine Abschwächung besagter Zapfen (3) in Folge des fortwahrenden Endanschlags zu verhindern, bei entsprechender mangelnder Zentrierung der Kupplung;
- ein kleines Abdeckgehäuse (5) gegen Staub, das mehrere Schlitze (16) für den Durchgang der Zapfen (3) wahrend der Spannung und der Freigabe enthalt;
- eine oder mehrere selbstreinigende Buchsen (6) oder Rollonlinearbuchsen;
- einen Läufer (7), der je nach vorhandenem Raum und der Anzahl der Spannungspunkte verschiedene Ausmasse aufweisen kann, mit Verstellungs- oder Umdrehungsbewegung;
- einen Motorzapfen (8) versehen mit einem Gewinde zum Aufschrauben auf den Läufer (7) und mit einem glatten Teil, um sich in der selbstschmierenden Buchse (10) drehen zu können, bei Verringerurig des Durchmessers, mit einem Keil (9) zur Kupplung mit dem Motorzahnrad (11), das am Ende besagten Zapfens (8) befestigt ist;
- eine selbstschmierende Buchse (10), die rund, eckig oder polygonal geformt sein kann, um das Festklammen zu bewirken und das Gleiten und den Austritt besagten Zapfens (3) aus dem Flansch (1)
zu verhindern, wobei, wenn man den Zapfen (8) entfernt, der Läufer (7) die Zapfen (3) freigibt und die Halbkolben (2) ersetzt werden.

2. Vorrichtung nach Anspruch 1. **gekennzeichnet durch** aussere und innere Verbindungsflansche, je nach Anzahl da Halbkolben,, mit mehreren Spannungspunkten (15) für den inneren Teil des Flansches.

3. Vorrichtung nach Anspruch 1, **gekennzeichnet durch** eine Einlassung die unter dem Haltebugel vorgesehen ist, um anstatt einer Scheibe (4) ein Tragplattchen einzusetzen, das mit dem Zapfen (3) fest verbunden ist, wobei das Ganze an dem Haltebugel befestigt ist.

4. Vorrichtung nach Anspruch 1, **gekennzeichnet dadurch, dass** die Flansche (1) sich lockern und dadurch von dem Zentralzylinder distanzieren und ihn auch im Falle von aus mehreren Kolben bestehenden Flanschen ersetzen, wobei, wahrend da aussere Teil sich lockert, der innere Teil, der mit dem Ende der Halbbugel (2) verbunden ist, unter dem Druck von Federn mit Kopfkugeln an seinem Platz bleibt und mit einem kleinen Druck nach aussen hin sich der Bügel oder der Zylinder lockert, und dadurch ein Ersetzen ermöglicht.

5. Vorrichtung nach Anspruch 1, **dadurch gekennzeichnet, dass** die Befestigung der Bügel durch Schrauben oder Ähnliches, die durch besagte Bügel gehen, und die auf dem Zylinder befestigt sind, erfolgt.

6. Vorrichtung nach Anspruch 1, **gekennzeichnet durch** eine Gewindeöffnung auf den Seitenflanschen zur Einführung einer Schraube, die auf einen Federkolben einwirkt und **dadurch** die Haltebugel blockiert.

7. Vorrichtung nach Anspruch 1, **gekennzeichnet durch** einen bearbeiteten Läufer, der sich in einer Buchse oder linearen Führung bewegt, wobei die Buchse in einem vorgesehenen, zentralen Punkt befestigt oder mit zwei Extremabluchsen versehen ist, mit Übertragungsbewegung mit veränderlichem oder rotierendem Hub um die eigene Achse, die sich spannen und entspannen **durch** eine Nockenausbildung oder **durch** Kurvengetriebe.

8. Vorrichtung nach Anspruch 1, **gekennzeichnet durch** die Umfangverlangerung des Zylinders **durch** Zunahme des Umfangs der Bügel, mit Einschaltung von Zwischenlegescheiahen und da Verlängerung des Kolbens (3), der unter besagten Bügeln liegt, um eine feste und genaue totale Spannung zu ermöglichen, oder indem die Anzahl der Halbkolben erhöht wird.

9. Vorrichtung nach Anspruch 1, **gekennzeichnet durch** eine Bürste zur Entfernung des sich **durch** die fortwahrende Arbeit bildenden Films, wodurch die Entfernung der Teigwaren von der Walze erleichtert wird, die nach dem Durchgang des Messers verarbeitet werden.

10. Vorrichtung nach Anspruch 1, zur Verarbeitung von nicht gefüllten Teigwaren innerhalb des Durchziehvorgangs, **gekennzeichnet durch** die Gegenwart von kleinen zylindrischen Walzenpaaren, die entlang der gesamten Lange den gleichen Durchmesser aufweisen, und die mit Abänderungen und Formen zur Vergrosserung und Verringerung des Durchmessers versehen sind, und die in den seitlichen Strukturen der Hülle (19) mit Zahnradgetrieben (20) vorgesehen sind.

## Revendications

1. Dispositif à structures modulables pour l'impression à relief sur pâtes alimentaires et semblables qu'on peut appliquer sur toutes les machines existantes pour produire des pâtes alimentaires, **caractérisé par**:
- une bride (1) doté à l'intérieure de logements (14) pour une douille (10) et d'un logement pour une rondelle (12) et pour un boulon ou vis (13), et pourvu d' engrenages (11) à deux roues dentées ou couples à vis perpétuelle-roue hélicoïdale;
- un ou plusieurs demi-segments (2) avec des pivots sous-segment (3) ;
- un ou plusieurs pivots sous-segment (3) arrondis pour' rendre plus facile l'entrée et la sortie dans les vissages (17) d'un curseur (7) et dotés dans la partie. supérieure, d'une rondelle (4) plat dans la partie inférieure et courbée dans la partie supérieure, pour adhérer au sous-segment, sans filetage intermédiaire, apte à éviter un affaiblissement de dits pivots (3) à la suite des arrêtes continues, avec des relatifs hors-centres des greffes;
- un petit carter (5) de couverture contre la poussière qui comprenne plusieurs fentes (16) pour le passage des pivots (3) pendant le serrage et le déblocage;
- une ou plusieurs douilles (6) autolubrifiantes ou douilles linéaires-rollon;
- un curseur (7) de dimensions variables en raison de l'espace disponible et au numéro des points de serrage, avec mouvement translator ou rotatoire;
- un pivot- moteur (8) doté de filetage pour le vissage dans le curseur (7) d'une partie lisse pour tourner dans la douille auto-lubrifiante (10) avec réduction de diamètre, avec une clavette (9) pour le clabotage avec l'engrenage moteur (11) fixé sur l'extrémité de dit pivot (8);
- une douille auto-lubrifiante (10) de dimension circulaire, carré ou polygonal pour déterminer le blocage et éviter le glissement et la sortie de dit pivot (3) de la bride (1);
où, quand on enlève le pivot (8), le curseur (7) débloque les pivots (3) et les demi-segments (2) sont remplacés.

2. Dispositif selon fa revendication 1, **caractérisé par** la présence de brides composées extérieures et intérieures, selon le numéro des demi-segments, avec plusieurs points de serrage (15) pour la partie intérieure de la bride.

3. Dispositif selon la revendication 1, **caractérisé par** un renforcement réalisé dans le sous-segment pour l'introduction, en lieu de la rondelle (4), d'une plaquette portante solidaire au pivot (3), l'ensemble étant fixée dans dit sous-segment.

4. Dispositif selon la revendication 1, caractérisé du fait que les brides (1) se desserrent et par conséquence, se distancent du cylindre central, le remplacent aussi dans le cas de brides composées par plusieurs pivots et, dans ce cas, desserrant la partie extérieure, la partie intérieure, qui adhère à l'extrémité des demi-segments (2), sous pression de ressorts avec billes en tête, reste bloquée et avec une pression minimale vers l'extérieur, le segment ou le cylindre se débloquent, en permettant le remplacement.

5. Dispositif selon la revendication 1, caractérisé du fait que le fixage des segments a lieu au moyen de visses ou semblables, qui passent au travers de dits segments qui sont fixés sur le cylindre.

6. Dispositif selon la revendication 1, **caractérisé par** la réalisation d'un trou taraudé sur les brides latérales pour l'insertion d'une vis qui agit sur un pivot à ressort, en bloquant les demi-segments.

7. Dispositif selon la revendication 1, **caractérisé par** un curseur travaillé qui glisse dans une douille ou aussi dans un guide linéaire, fixé dans un logement approprié dans une zone centrale ou doté de deux douilles extrémales, avec mouvement à translation à cours variable ou rotatoire sur son propre axe, qui se serre et se débloque au moyen d'une conformation à came avec un système à excentrique.

8. Dispositif selon la revendication 1, **caractérisé par** un allongement de la circonférence du cylindre au moyen de l'augmentation de la circonférence des segments, avec l'interposition d'épaisseurs et l'allongement du pivot (3) disposé sous dits segments, pour permettre un serrage total rigide et précis, ou en augmentant le numéro des demi-segments.

9. Dispositif selon la revendication 1, **caractérisé par** un balai pour l'élimination de la palme qui se forme à cause de la activité continue, et qui rende facile le décollement de la pâte du rouleau, après le passage du couteau.

10. Dispositif selon la revendication 1, pour la fabrication de pâtes alimentaires non fourrées, inséré dans le procès de tréfilation **caractérisé par** la présence de couples de petits rouleaux (18) à cylindre, avec le même diamètre sur leur longueur et dotés de variations et tournages pour l'augmentation ou la réduction de diamètre, disposés dans les structures latérales à coquille (19) avec engrenages (20) de transmission.
